# EUROPEAN PATENT SPECIFICATION

(11) **EP 1 428 804 B1**
(45) Date of publication and mention of the grant of the patent: **11.06.2014**
(21) Application number: 03078870.7
(22) Date of filing: 08.12.2003
(51) Int. Cl.: C04B 7/02, C04B 111/00, C04B 111/80, C04B 7/06, C04B 7/44

(54) **Clinker and white cement with a high sulfur content derived from a process using as fuel a high sulfur content pet-coke**
Klinker und Weisszement mit hohem Schwefelgehalt, hergestellt aus einem Verfahren, das einem Petrolkoks mit hohem Schwefelgehalt als Brennstoff benutzt
Clinker et ciment blanc à haute teneur en soufre, issu d'une procédé utilisant un coke de petrole en haute teneur en soufre comme combustible

(30) Priority: 10.12.2002 MX PA02012235
(43) Date of publication of application: 16.06.2004
(73) Proprietor: Cemex Research Group AG, 2555 Brügg (CH)
(72) Inventor: Lopez Gonzalez, Waltter, 64348 Monterrey, Nuevo Leon (MX); Castillo Linton, Carlos Enrique, 64348 Monterrey, nuevo Leon (MX); Eguia Marquez, Graciela, 64348 Monterrey, Nuevo Leon (MX)
(74) Representative: Novagraaf Technologies

(56) References cited:
- EP-A1- 0 812 811
- US-A- 5 356 472
- US-A- 5 374 309
- US-A- 5 851 282

## Description

### FIELD OF THE INVENTION

The present invention is related to a new family of clinker and white portland cements compositions, and more particularly, to a family of white clinkers compositions with a high content of sulfur coming from, namely, sulfur in fuel fixing, and the properties of cements thus obtained.

### BACKGROUND OF THE INVENTION

Portland cement clinker is basically composed of four crystalline stages: alite: 3CaO.SiO₂ (C₃S), belite: 2CaO.SiO₂ (C₂S), tricalcic aluminate: 3CaO.Al₂O₃ (C₃A) and tetracalcic aluminate: 4CaO.Al₂O₃.Fe₂O₃ (C₄AF), the latter, is the only one colored and therefore, the only one responsible for the characteristic color of the ordinary gray Portland cement.

The ordinary Portland cement is the product from the Portland cement clinker grinding and a setting regulator, which traditionally has been gypsum (CaSO₄.2H₂O).

Processes and plants used for clinker of white Portland Cement (P.C.) manufacturing are widely known in the art. Generally, manufacturing process White P.C. clinker differs from Gray P.C. in the following basic aspects:
(1) Chemical: Since for obtaining a White P.C. clinker (the total Fe₂O₃ content from raw materials), in White P.C. clinker is controlled and most be less than 0.5%. This involves removing the main melting agent from the gray P.C. clinker and therefore, liquid stage will only be formed from calcium aluminates, that will crystallize after a cooling process as C₃A, thus eliminating formation of the C₄AF solid solution; responsible for the gray P.C. color.
(2) Sintered: Removing main melting element from the gray Portland cement clinker, involves that the melting agent in the white P.C. clinker is in less amount and over all, that the temperature in the liquid stage increases, from 1338°C (2440.4°F) (in a gray P.C. clinker), to a temperature of 1350-1470°C (2642 - 2678°F) (in a white P.C. clinker), thus demanding a higher fuel consumption during sintering, compared to the gray P.C. clinker sintering process.
(3) Cooling: In the obtaining process of white P.C. clinker, typically clinker cooling process is tougher than in the gray P.C. clinker manufacturing process, trying to stabilize the most of Iron on a reduced state, (Fe2+), that is less chromophore than (Fe3+).

Despite the differences above mentioned between both Portland cement clinker manufacturing processes, basically the two Portland cement clinkers are generally constituted by the same main mineralogical stages: C₃S, C₂S, C₃A and C₄AF (exclusively for Portland cement gray clinker).

Advantages of a white P.C. over a gray P.C., are basically their white color, for which it is widely used for exposed structures and texturized elements, which can be white or colored; it is also common that white Portland cement develops better strength to compression due to a high content on C₃A, compared to a gray Portland cement. A disadvantage of a white Portland cement is its low resistance to sulfates attack, mainly due to the high content of C3A, that reacts to the environment sulfates and ettringite is produced when mortar or concrete is hardened, causing fissures or cracking.

On the other hand, in the state of the art, it is known that sulfur coming from traditionally used fuels for the cement industry, such as gas (non sulfur containing) carbon (1-2% S), fuel oil (2-4% S) and low sulfur content pet-coke (< 5% S), is fixed on clinker in the form of anhydrite, CaOSO₃, and in the presence of alkali leaching it forms alkaline sulfates: Na₂O.SO₃ and K₂O.SO₃. Said anhydrite and alkaline sulfates fixing on the clinker is a desirable factor since up to date it has represented, the only way of extracting sulfur from the interior of the furnace, avoiding blockings and obstructions of the kiln itself, as well as the emission of SOₓ to the atmosphere.

In this way, sulfur, since it is a semi-volatile element, it forms within the furnace, a cycle which reconcentrates sulfur and once it reaches a critical SO₃ evaporating concentration, it is associated to the kiln clustering that makes kiln operation difficult and unstable reducing its production, and can even form serious blockings, that may involve a stoppage in the kiln itself.

On the other hand, fuel-oil cost is inversely proportional to its sulfur content. For this reason, the high sulfur content pet-coke ( 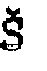 > 5%), represents an opportunity for the cement industry due to its availability at the lower cost.

Unfortunately, the use of said fuel shows the inconvenient that it requires special care for the operation; and new methods that could ease use without detriment to the furnace operation continuity. This is, the use of the pet-coke as fuel, in one hand, generates the necessary heat to keep the process temperature, and on the other, produces a higher amount of SO₂ this means an important amount that can produce blockings on the preheater and form rings on the rotating kiln, which generates troubles on the operation, reducing its efficiency and in more serious cases, it does not allow to continue its operation.

On one hand, and particularly in relation to the Portland cement clinker, in the state of the art there are numerous efforts aimed to facilities, equipment and/or processes design, for the use of solid fuels with a high sulfur content, in order to solve the problem associated to SO₂ forming and accumulation. However, most of processes and/or plants that manufacture Portland cement clinker and use a solid fuel with a high sulfur content, present certain disadvantages such as complexity of processes and equipments, as well as high operational costs. Examples of said efforts are disclosed in, for example, the United States application No. 4,465,460 entitled "Cement clinker production" issued to Paul Cosar on August 14, 1984; United States applications No. 4,662,945 and 4,715,811 both entitled "Process and apparatus for manufacturing poor cement clinker in sulfur" issued to Thomas R. Lawall on May 5, 1987 and in December, 1987 respectively; the United States application No, 6,142,771 entitled "Cement clinker production control using high sulfur content fuel within a rotating kiln with a Lelep-Lepol displaceable grid through the sulfur final analysis in the final product", issued to Joseph Doumet on November 7, 2000; the Chinese Application No. 1,180,674 issued to Wang Xinchang et al on May 6, 1998 entitled "Method for producing high quality cement using pet-coke with a high sulfur content".

A recent effort to solve problems associated to the use of high sulfur content coke, is disclosed by Mexican Application No. PA/a/2001/007228 entitled "Method of producing cement clinker using high sulfur content pet-coke" filed on July 13, 2001 by Trademarks Europa, S.A. de C.V., which is a subsidiary of CEMEX group. On this application, a method to produce cement clinker that allows a more economic and efficient use of fuels with a high sulfur content such as pet-coke and that minimizes problems associated to blocking and incrustations due to the high concentration of SO₂ and/or SO₃ on the system. It is described in this document, the relationship to a high quality cement clinker that does not require additives to improve its final physical properties.

On the other hand, there is a current of scientists and technologists who have focused their efforts on the reduction of the Portland cement clinker sintering, through row mix or raw meal chemical modifications, and have frequently used non-traditional mineralizers and melting agents. Examples of this current are generally described in the United States application No. 5,698,027 entitled "Method and Plant for manufacturing mineralized Portland cement clinker" granted to F.L. Smidth & Co., which is related to a mineralizer such as gypsum, fluorite, etc., as a control parameter for preventing or reducing problems associated to the rotating kiln operation; the Spain application No. 542,691 "Process for obtaining white clinker with a low fuel consumption using fluorite and sulphates as raw meal components", describes a process for producing a clinker composition which is formed under lower temperatures compared to traditional temperatures for the Portland clinker manufacturing", forming a new liquid phase called fluorelestadite: 3C₂S.3CaO₄.CaF₂. Besides, said cements, exhibit/show some problems with strength development, over all, at early ages (1 and 3 days), even when strength increases at long ages (28 days and more), compared to strength developed by common Portland cement.

There is a third group of researchers who have found non-Portland clinkers cementing compositions, based on the formation of a phase rich in sulfur, calcium sulphoaluminate: 4CaO.3Al₂O₃.SO₃ (C₄A₃S); said calcium sulphoaluminate based cements, exhibit an accelerated development of initial strengths compared to Portland cement, due to C₄A₃S hydration to form ettingite. Examples of this current are United States application No. 6,149,724 to Poo Ulibarri et al, granted to CEMEX in 2000, or the Canadian application No. 219339 and European application No. 0 812 811.

In 1994, United States of America application No. 5,356,472 "Portland cement clinker and Portland cement", to Ivan Odler, discloses a method for manufacturing gray clinkers under low forming temperatures, for example between 1150°C-1350°C (2102°F- 2462°F), clinker was formed by C₃S, C₄A₃S and C₄AF phases and practically without C₂S and C₃A, if to the raw mix containing CaO, SiO₂, Al₂O₃, and Fe₂O₃ was added an inorganic additive containing SO₃ and other inorganic additive containing fluorine and strengths of cement obtained were comparable to the conventional gray Portland cement, when cement was prepared with a clinker of a 80% C₃S, 10% C₄A₃S and 10% C₄AF composition.

More recently in 1997, the document US patent 5,851282 disclosed a Portland clinker composition that can be produced at lower temperatures by adding SO3 sources and CaF2 in the raw meal while high levels of C3S in the clinker are maintained ; as a consequence the level of CaO (free lime) in the clinker is increased to around 5%

However, any document of the prior art is related to the main object of the present invention, which is to produce a family of mineralogical compositions of white clinkers, formed by C₃S, C₂S, C₄A₃S, C₃A, C₁₁A₇.CaF₂, CS phases, without the presence of C₄AF, with a high capacity of fixing sulfur coming from pet-coke as a sulfur source and which enables the use of a high sulfur content fuels (> 5% S), using the conventional infrastructure of cement plants, for the production of white portland cements with compression strength similar or even greater to the conventional white Portland cement strength.

Therefore, it is an objective of the present invention to provide new clinker and white portland cement compositions with high capacity of fixing sulfur coming from pet-coke with a high sulfur content, said pet-coke being used as fuel.

Another objective of the present invention is to provide new clinker and white Portland cement compositions exhibiting low fuel consumption on its manufacturing process and having fast setting developing increased compression initial strengths.

It is further another object of the present invention to provide new clinker and white portland cement compositions using the conventional cement Plants infrastructure.

### BRIEF DESCRIPTION OF THE INVENTION

The present invention is related to a new family of white portland cement clinker compositions, with a high capacity of fixing sulfur coming from pet-coke with a high sulfur content, said pet-coke being used as a fuel, and with white portland cement properties thus obtained. White portland cement clinker of the present invention comprises the amounts of clinker phases in percentage by weight, as follows: from 40 to 75% of C₃S, from 10 to 35% of C₂S, from 0 to 15% of C₃A, without C₄AF, from 0 to 10% of C, fro 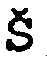 m 2 to 15% of C₄A₃ 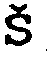 , from 0 to 5 of C₁₁A₇.CaF₂, %CaF₂ total from 0.3 to 1.5 measured as CaF₂, %Fe₂O₃ from 0 to 0.5%; and a content of SO₃ between 1.5 and 5% by weight obtained through a raw meal calcination mainly containing CaO, SiO₂, Al₂O₃, y CaF₂, using pet-coke as fuel with a sulfur content higher than 5%, at temperatures ranging between 1200 and 1350°C (2192 and 2462°F), without the addition of any additive containing SO₃ to the raw meal.

### DETAILED DESCRIPTION OF THE INVENTION

The present invention is related to a new family of white portland cement clinker compositions based on factors such as, alite (C₃S) formation temperatures and calcium sulphoaluminate (C₄A₃ 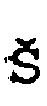 ) decomposition; the use of high sulfur content organic fuels that provide cement clinker a SO₃ content of 1.5 to 5% by weight; and sintering temperature reduction. It is widely known that alite formation temperature for a Portland cement clinker is approximately of 1380°C (2516°F), while calcium sulphoaluminate decomposition temperature for a white portland cement clinker is approximately 1350°C (2462°F). Taking into account these criteria among others, inventors have discovered that a new family of white portland cement clinker compositions can be obtained through the use of adequate mineralogical phases (C₃S, C₂S, C₃A, C 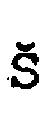 , C₄A₃ 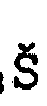 and C₁₁A₇.CaF₂) of cement clinker and through the reduction of sintering temperature, using a high sulfur content organic source, without having problems associated to the use of said organic source as fuel (for example, high sulfur content pet-coke) which has a sulfur content higher than 5%.

White portland cement, prepared from the above described clinker by fixing sulfur supplied mainly by high sulfur content pet-coke (>5% 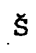 ), in the form of calcium sulphoaluminate, C₄A₃ 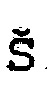 , exhibits an excellent increase in the compression strength, particularly it exhibits an accelerated development of initial strengths, specially curing the interval from 1 to 3 days. It is specifically referred to the illustrative embodiments as follows:

Total content of SO₃ in cement shall be between 3 an 10% by weight obtained through the raw meal calcination containing CaO, SiO₂, Al₂O₃ and CaF₂, using pet-coke as fuel, with a sulfur content higher than 5%, without the addition of any additive containing SO₃ in the raw meal.

A white Portland cement clinker can include the following amounts from the clinker phases in % by weight:
3CaO.SiO₂ (C₃S): 40 to 75,
2CaO.SiO₂ (C₂S): 10 to 35,
3CaO.Al₂O₃ (C₃A): 0 to 15,
CaO.SO₂ (C 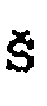 ): 0 to 10,
4CaO.3Al₂O₃.SO₃ (C₄A₃ 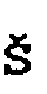 ): 2 to 15,
11CaO.7Al₂O₃.CaF₂ (C₁₁A₇.CaF₂): 0 to 5,
Total %CaF₂: 0.3 to 1.5 measured as CaF₂,
%Fe₂O₃: 0 to 0.5,

And a SO₃ content between 1.5 and 5% by weight. Clinker is obtained through a raw meal calcination containing CaO, SiO₂, Al₂O₃ and CaF₂, using pet-coke as fuel with a sulfur content higher than 5% at temperatures between 1200 and 1350°C (2192°F to 2462°F) without the addition of any additive containing SO₃ to the raw meal.

A cement clinker with percentages by weight of the following clinker phases is preferred.
C₃S : 40 to 75,
C₂S: 10 to 35,
C: 0 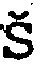 to 10,
C₄A₃ 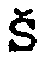 : 5 to 15,
C₁₁A₇.CaF₂: 2 to 5,
Total %CaF₂: 0.3 to 1.5 measured as CaF₂,
%Fe₂O₃: <0.5,

In another embodiment of the present invention, a cement clinker with percentages by weight of the following clinker phases is more preferred:
C₃S: 40 to 75,
C₂S: 10 to 35,
C 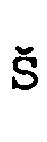 : 0 to 10,
C₄A₃ 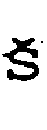 : 5 to 15,
Total %CaF₂: 0.3 to 1.5 measured as CaF₂,
%Fe₂O₃: <0.5,

Yet in another embodiment of the present invention, a cement clinker with percentages by weight of the following clinker phases is more preferred:
C₃S: 40 to 75,
C₂S: 10 to 35,
C₃A: 5 to 15,
C 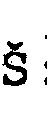 : 0 to 10,
C₄A₃ 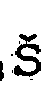 : 2 to 10,
Total %CaF₂: 0.3 to 1.5 measured as CaF₂,
%Fe₂O₃: <0.5

Clinker calcination can be controlled to produce specific amounts of C₂S and C₃A phases, such as the addition of C₂S and C₃A clinker phases, and must be higher or equal to 10% by weight. Preferably C₃A clinker phase is absent.

Clinker phase forming is eased through CaF2 percentage which is about 0.3 to 1.5 measured as CaF₂ in the raw meal. The preferred range is between 0.3 and 1.0% measured as CaF2 in the raw meal.

A preferred SO₃ content in the clinker can be indicated as 1.5 to 5% by weight, mainly supplied through the organic fuel such as pet-coke with a sulfur % higher than 5%. However, it is also possible to optionally complement the SO₃ content in the clinker with another inorganic sources selected from the group consisting of plaster, anhydrite or industrial debris containing sulfur.

Corresponding calcium sulphate can be used to prepare finished white Portland cement.

To optimize setting reaction, according to an embodiment, it is suggested that the clinker be grinded in a specific area of 465 to 775 in²/g measured according to the ASTM C-204 standard through Blaine.

Forming a sulfur-rich phase, calcium sulphoaluminate: 4CaO.3Al₂O₃.SO₃ (C₄A₃ 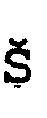 ), shows an accelerated development of initial strength compared to those of Portland cement, due to C₄A₃ 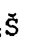 hydration to form ettingite. Therefore, cements according to the present invention with C₄A₃ 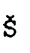 contents under 15% by weight, do not practically exhibit any expansion, for which, said cement has an initial strength exceeding that of a common Portland cement.

On the other hand, during the clinker calcination of the present invention, less melted phase is formed (which is also due to the low temperature of calcination), which drives to a relatively porous clinker, in return, the clinker has a better grinding capacity, and grinding costs are reduced to the same specific area. Particularly, another relevant advantage of the clinker herein, is that alite and belite crystals sizes are less than 25 micrometers, which provides better grinding easiness than the conventional white Portland cement clinker.

Clinker has a free lime percentage less than 1.5%, this is, it shows a free lime content similar to that of a white Portland cement clinker, but sintered at 200°C (392°F) under the traditional white Portland clinker sintering temperature.

The present invention will be better explained in detail based upon several examples. However, following examples are provided only for illustrative purposes, and it is not intended to limit the scope of the present invention.

Sample 1 describes a cement free of C₃A, but comprises a 9% by weight of C₄A₃ 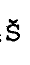 and 4% by weight of C₁₁A₇.CaF₂.

Sample 2 describes a cement free of C₃A and C₁₁A₇.CaF₂, but comprising a 12% by weight of C₄A₃ 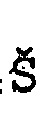 .

Sample 3 describes a cement free of C₁₁A₇.CaF₂, but comprising a 7% by weight of C₃A and 3% by weight of C₄A₃ 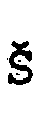 .

Percentages from other clinker phases, SO₃ content in clinker, selected calcination temperature, as well as the total of SO₃ in cement are shown in the table below, including compression strength values measured after 1,3,7 and 28 days.

To illustrate the advantages that can be obtained with cement of the present invention, a conventional Portland cement, calcined at 1350°C (2642°F), is also shown as sample 4.

| Number | Clinker phase (%) | | | | | | SO3 in clinker | Calcina tion Tempe rature | SO3 Total | Resistance to compression (N/mm2) | | | |
|---|---|---|---|---|---|---|---|---|---|---|---|---|---|
| Sample | C3S | C2S | C3A | C4A3S | C11A7. CaF2 | CS | % | (°F) °C | % | 1 d | 3 d | 7 d | 28 d |
| 1 | 61 | 24 | 0 | 9 | 4 | 2 | 3 | (2282) 1250 | 6 | 16 | 32 | 44 | 50 |
| 2 | 61 | 24 | 0 | 12 | 0 | 3 | 3 | (2282) 1250 | 6 | 22 | 34 | 51 | 65 |
| 3 | 61 | 24 | 7 | 3 | 0 | 5 | 3 | (2462) (1350) | 4 | 15 | 29 | 43 | 57 |
| 4 | 63 | 23 | 14 | 0 | 0 | 0 | 0.2 | (2642) 1350 | 3 | 20 | 27 | 39 | 52 |

Data show that sample 2, according to the present invention, exhibits a significant increase on compression strength at all ages and samples 1 and 3, show comparable strength to those developed by sample 4 which is the reference of white Portland cement and calcined at 1350°C (2642°F). Besides, white portland cement of the present invention has initial setting time from 10 to 45 minutes, measured according to the ASTM C-191 standard through Vicat.

In a particularly preferred embodiment of the present invention, white portland cement comprising clinker, which can be mixed with other materials such as limestone, slag, fly ash and/or puzolanic materials.

Even when certain embodiment of the present invention has been illustrated and described, it should be noted that numerous possible modifications can be made, that fall within the claims attached hereto.

## Claims

1. A white portland cement clinker composition, with a high capacity of fixing sulfur coming from pet-coke with a high sulfur content (>5% 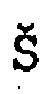 ), used as a fuel, and besides this clinker exhibits a low fuel consumption and the cement produced has fast setting, wherein it comprises the amounts of clinker phases in percentage by weight, as follows:
3CaO.SiO₂ (C₃S) : 40 to 75,
2CaO.SiO₂ (C₂S) : 10 to 35,
3CaO.Al₂O₃ (C₃A) : 0 to 15,
CaO.SO₂ (C 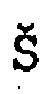 ) : 0 to 10,
4CaO.3Al₂O₃.SO₃ (C₄A₃ 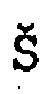 ) : 2 to 15,
11CaO.7Al₂O₃.CaF₂ (C₁₁A₇.CaF₂) : 0 to 5,
Total %CaF₂: 0.3 to 1.5 measured as CaF₂,
%Fe₂O₃: 0 to 0,5,
and SO₃ content between 1.5 and 5% by weight obtained trough the calcination of a raw meal mainly comprising CaO, SiO₂, Al₂O₃ and CaF₂, using as fuel pet-coke with a sulfur content higher than 5%, at temperatures between 1200 and 1350°C (2192 and 2462°F), without the addition of any additive containing SO₃ in the raw meal.

2. The white portland cement clinker, with a high capacity of fixing sulfur coming from pet-coke with a high sulfur content, used as a fuel, and further exhibiting a low fuel consumption and fast setting, according to claim 1, wherein it comprises the amounts of clinker phases in percentage by weight, as follows:
C₃S : 40 to 75,
C₂S: 10 to 35,
C 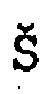 : 0 to 10,
C₄A₃ 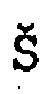 : 5 to 15,
C₁₁A₇.CaF₂: 2 to 5,
Total %CaF₂: 0.3 to 1.5 measured as CaF₂,
%Fe₂O₃: <0.5,
and a S03 content between 1.5 and 5% by weight obtained through the calcination of a raw meal containing CaO, SiO₂, Al₂O₃ and CaF₂, using as fuel pet-coke with a sulfur content higher than 5%, at a temperature of about 1250°C (2282°F), without the addition of any additive containing SO₃ in the raw meal.

3. The white portland cement clinker, with a high capacity of fixing sulfur coming from pet-coke with a high sulfur content and further exhibiting a low fuel consumption and fast setting, according to claim 1, wherein it comprises the amounts of clinker phases in percentage by weight, as follows:
C₃S: 40 to 75,
C₂S: 10 to 35,
C 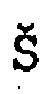 : 0 to 10,
C₄A₃ 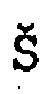 : 5 to 15,
Total %CaF₂: 0.3 to 1.5 measured as CaF₂,
%Fe₂O₃: <0.5,
and a SO₃ content between 1.5 and 5% by weight obtained through the calcination of a raw meal containing CaO, SiO₂, Al₂O₃ and CaF₂, using as fuel pet-coke with a sulfur content higher than 5%, at a temperature of about 1250°C (2282°F), without the addition of any additive containing SO₃ in the raw meal.

4. The white portland cement clinker, with a high capacity of fixing sulfur coming from pet-coke with a high sulfur content, used as a fuel, and further exhibiting a low fuel consumption and fast setting, according to claim 1, wherein it comprises the amounts of clinker phases in percentage by weight, as follow:
C₃S: 40 to 75,
C₂S: 10 to 35,
C₃A: 5 to 15,
C 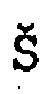 : 0 to 10,
C₄A₃ 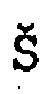 : 2 to 10,
Total %CaF₂: 0.3 to 1.5 measured as CaF₂,
%Fe₂O₃: <0.5
and a SO₃ content between 1.5 and 5% by weight obtained through the calcination of a raw meal containing CaO, SiO₂, Al₂O₃ and CaF₂, using as fuel pet-coke with a sulfur content higher than 5%, at a temperature of about 1350°C (2462°F), without the addition of any additive containing SO₃ in the raw meal.

5. The white portland cement clinker, with a high capacity of fixing sulfur coming from pet-coke with a high sulfur content, used as a fuel, and further exhibiting low fuel consumption and fast setting, according to any of the above claims 1 to 4, wherein the addition of the amounts of C₂S and C₃A clinker phases is higher than or equal to 10% by weight.

6. The white portland cement clinker, with a high capacity of fixing sulfur coming from pet-coke with a high sulfur content, used as a fuel, and further exhibiting a low fuel consumption and fast setting, according to any of the above claims 1 to 4, wherein the total CaF₂ % amount in the raw meal should be from 0.3 to 1.0 % by weight measured as CaF₂.

7. The white portland cement clinker, with a high capacity of fixing sulfur coming from pet-coke with a high sulfur content, used as a fuel, and further exhibiting a low fuel consumption and fast setting, according to any of the above claims 1 to 4, wherein the SO₃ content of the cement clinker is mainly obtained through an organic fuel such as pet-coke with a sulfur % higher than 5%.

8. The white portland cement clinker, with a high capacity of fixing sulfur coming from pet-coke with a high sulfur content, used as a fuel, and further exhibiting a low fuel consumption and fast setting, according to claim 1, wherein the optionally, said clinker SO₃ content can be complemented with other inorganic sources selected from the group consisting of plaster, anhydrite, or industrial debris containing sulfur.

9. The white portland cement clinker, with a high capacity of fixing sulfur coming from pet-coke with a high sulfur content, used as a fuel, and further exhibiting a low fuel consumption and fast setting, according to any of the above claims 1 to 4, wherein it has alite and belite crystals sizes smaller than 25 micrometers, which provides better grinding eaziness than the conventional white Portland cement clinker.

10. The white portland cement clinker, with a high capacity of fixing sulfur coming from pet-coke with a high sulfur content, used as a fuel, and further exhibiting "low fuel consumption and fast setting, according to any of the above claims 1 to 4, wherein it has a free lime percentage less than 1.5% in the clinker obtained.

11. A white portland cement, comprising the cement clinker according to any of the above claims 1 to 4, wherein the SO₃ content of said cement is between 3.5 and 10%.

12. The white portland cement, comprising the white clinker with a high capacity of fixing sulfur coming from a high sulfur content pet-coke, used as fuel, and besides exhibiting low fuel consumption and fast setting, according to claim 11, wherein it has a specific area of 465 to 775 in²/g measured according to the ASTM C-204 standard through Blaine.

13. The white portland cement obtained from white clinker with a high capacity of fixing sulfur coming from a high sulfur content pet-coke, used as fuel, and besides exhibiting low fuel consumption and fast setting, according to claim 11, wherein it has an initial setting time between 10 and 45 minutes measured according to the ASTM C-191 standard through Vicat.

14. The white portland cement obtained from the family of high sulfur content and low fuel consumption family of clinkers, according to claim 11, wherein it further has a resistance to compression measured according to ASTM C-109 of about 15 to 25 N/mm² @ 1 day, 25 to 3-5 N/mm² @ 3 days, 40 to 55 N/mm² @ 7 days, and from 50 to 70 N/mm² @ 28 days.

15. A white portland cement comprising the cement clinker according to any of claims 1 to 4, wherein it can be mixed with other materials such as lime, slag, fly ash and/or puzolanic materials.

16. A white portland cement comprising the cement clinker according to any of claims 2 to 3, wherein the absence of C₃A in clinker enables manufacturing cements resistant to sulphates.

## Patentansprüche

1. Weißzement-Klinkerzusammensetzung mit starker Bindungsfähigkeit für Schwefel aus Petrolkoks mit hohem Schwefelgehalt (>5 % 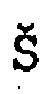 ), als Brennstoff benutzt, bei welcher der Klinker ferner einen geringen Brennstoffverbrauch aufweist und der daraus hergestellte Zement schnell abbindet, wobei die Klinikerzusammensetzung die folgende Menge von Klinkerphasen in Gewichtsprozent umfasst:
3Cao.SiO₂ (C₃S): 40 bis 75,
2CaO.SiO₂ (C₂S): 10 bis 35,
3CaO.Al₂O₃ (C₃A): 0 bis 15,
CaO.SO2 (C 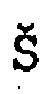 ): 0 bis 10,
4CaO.3Al₂O₃.SO₃ (C₄A₃ 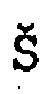 ): 2 bis 15,
11CaO.7Al₂O₃.CaF₂ (C₁₁A₇.CaF₂): 0 bis 5,
insgesamt %CaF₂: 0,3 bis 1,5 gemessen als CaF₂,
%Fe₂O₃: 0 bis 0,5,
und einen SO₃-Gehalt zwischen 1,5 und 5 Gewichtsprozent hat, der durch Kalzinierung eines hauptsächlich CaO, SiO₂, Al₂O₃ und CaF₂ enthaltenden Rohmehls bei Temperaturen zwischen 1200 °C und 1350 °C (2192°F und 2462°F) unter Verwendung von Petrolkoks mit einem Schwefelgehalt von über 5 % als Brennstoff und ohne Zusatz von SO₃-haltigen Zusatzmitteln zum Rohmehl erzielt wird.

2. Weißer Portlandzementklinker mit starker Bindungsfähigkeit für Schwefel aus Petrolkoks mit hohem Schwefelgehalt, als Brennstoff benutzt, der ferner einen geringen Brennstoffverbrauch aufweist und schnell abbindet, nach Anspruch 1, wobei der Klinker die folgende Menge von Klinkerphasen in Gewichtsprozent umfasst:
C₃S: 40 bis 75,
C₂S: 10 bis 35,
C 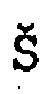 : 0 bis 10,
C₄A₃ 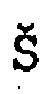 : 5 bis 15,
C₁₁A₇.CaF₂: 2 bis 5,
insgesamt %CaF₂: 0,3 bis 1,5 gemessen als CaF₂,
%Fe₂O₃: <0,5,
und einen SO₃-Gehalt zwischen 1,5 und 5 Gewichtsprozent hat, der durch Kalzinierung eines CaO-, SiO₂-, Al₂O₃- und CaF₂-enthaltenden Rohmehls bei einer Temperatur von etwa 1250°C (2282°F) unter Verwendung von Petrolkoks mit einem Schwefelgehalt von über 5 % als Brennstoff und ohne Zusatz von SO₃-haltigen Zusatzmitteln zum Rohmehl erzielt wird.

3. Weißer Portlandszementklinker mit starker Bindungsfähigkeit für Schwefel aus Petrolkoks mit hohem Schwefelgehalt, als Brennstoff benutzt, der ferner einen geringen Brennstoffverbrauch aufweist und schnell abbindet nach Anspruch 1, wobei der Klinker die folgende Menge von Klinkerphasen in Gewichtsprozent umfasst:
C₃S: 40 bis 75,
C₂S: 10 bis 35,
C 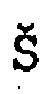 : 0 bis 10,
C₄A₃ 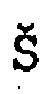 : 5 bis 15,
insgesamt %CaF₂: 0,3 bis 1,5 gemessen als CaF₂,
%Fe₂O₃: <0,5,
und einen SO₃-Gehalt zwischen 1,5 und 5 Gewichtsprozent hat, der durch Kalzinierung eines CaO-, SiO₂-, Al₂O₃- und CaF₂-enthaltenden Rohmehls bei einer Temperatur von etwa 1250°C (2282°F) unter Verwendung von Petrolkoks mit einem Schwefelgehalt von über 5 % als Brennstoff und ohne Zusatz von SO₃-haltigen Zusatzmitteln zum Rohmehl erzielt wird.

4. Weißer Portlandzementklinker mit starker Bindungsfähigkeit für Schwefel aus Petrolkoks mit hohem Schwefelgehalt, als Brennstoff benutzt, der ferner einen geringen Brennstoffverbrauch aufweist und schnell abbindet nach Anspruch 1, wobei der Klinker die folgende Menge von Klinkerphasen in Gewichtsprozent umfasst:
C₃S: 40 bis 75,
C₂S: 10 bis 35,
C₃A: 5 bis 15
C 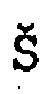 : 0 bis 10,
C₄A₃ 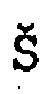 : 2 bis 10,
insgesamt %CaF₂: 0,3 bis 1,5 gemessen als CaF₂,
%Fe₂O₃: <0,5,
und einen SO₃-Gehalt zwischen 1,5 und 5 Gewichtsprozent hat, der durch Kalzinierung eines CaO-, SiO₂-, Al₂O₃- und CaF₂-enthaltenden Rohmehls bei einer Temperatur von etwa 1350°C (2462°F) unter Verwendung von Petrolkoks mit einem Schwefelgehalt von über 5 % als Brennstoff und ohne Zusatz von SO₃-haltigen Zusatzmitteln zum Rohmehl erzielt wird.

5. Weißer Portlandzementklinker mit starker Bindungsfähigkeit für Schwefel aus Petrolkoks mit hohem Schwefelgehalt, als Brennstoff benutzt, der ferner einen geringen Brennstoffverbrauch aufweist und schnell abbindet, nach einem der Ansprüche 1 bis 4, wobei die Summe der Klinkerphasenanteile an C₂S und C₃A größer oder gleich 10 Gewichtsprozent ist.

6. Weißer Portlandzementklinker mit starker Bindungsfähigkeit für Schwefel aus Petrolkoks mit hohem Schwefelgehalt, als Brennstoff benutzt, der ferner einen geringen Brennstoffverbrauch aufweist und schnell abbindet nach einem der Ansprüche 1 bis 4, wobei die gesamte prozentuale Menge an CaF₂ im Rohmehl, gemessen als CaF₂, 0,3 bis 1,0 Gewichtsprozent betragen sollte.

7. Weißer Portlandzementklinker mit starker Bindungsfähigkeit für Schwefel aus Petrolkoks mit hohem Schwefelgehalt, als Brennstoff benutzt, der ferner einen geringen Brennstoffverbrauch aufweist und schnell abbindet nach einem der Ansprüche 1 bis 4, wobei der SO₃-Gehalt des Zementklinkers im Wesentlichen durch einen fossilen Brennstoff wie Petrolkoks mit mehr als 5 % Schwefel erzielt wird.

8. Weißer Portlandzementklinker mit starker Bindungsfähigkeit für Schwefel aus Petrolkoks mit hohem Schwefelgehalt, als Brennstoff benutzt, der ferner einen geringen Brennstoffverbrauch aufweist und schnell abbindet nach Anspruch 1, wobei der genannte SO₃-Gehalt des Klinkers gegebenenfalls mit anderen anorganischen Quellen in Form von Gips, Anhydrit oder schwefelhaltigen Industrieabfällen komplementiert werden kann.

9. Weißer Portlandzementklinker mit starker Bindungsfähigkeit für Schwefel aus Petrolkoks mit hohem Schwefelgehalt, als Brennstoff benutzt, der ferner einen geringen Brennstoffverbrauch aufweist und schnell abbindet nach einem der Ansprüche 1 bis 4, wobei der Klinker Alit- und Belit-Kristalle mit Größen kleiner als 25 Mikrometer enthält, die eine bessere Mahlbarkeit als der übliche weiße Portlandzementklinker bieten.

10. Weißer Portlandzementklinker mit starker Bindungsfähigkeit für Schwefel aus Petrolkoks mit hohem Schwefelgehalt, als Brennstoff benutzt, der ferner einen geringen Brennstoffverbrauch aufweist und schnell abbindet nach einem der Ansprüche 1 bis 4, wobei der freie Kalkgehalt in dem erhaltenen Klinker kleiner als 1,5% ist.

11. Weißer Portlandzement mit Zementklinker nach einem der Ansprüche 1 bis 4, wobei der SO₃-Gehalt des genannten Zementklinkers zwischen 3,5 und 10 % beträgt.

12. Weißer Portlandzement bestehend aus weißem Klinker mit starker Bindungsfähigkeit für Schwefel aus Petrolkoks mit hohem Schwefelgehalt, als Brennstoff benutzt, der ferner einen geringen Kraftstoffverbrauch aufweist und schnell abbindet nach Anspruch 11, wobei der Zement eine nach Blaine gemäß ASTM-Standard C 204 bestimmte spezifische Oberfläche von 0,3 bis 0,5 m²/g aufweist.

13. Weißer Portlandzement hergestellt aus weißem Klinker mit starker Bindungsfähigkeit für Schwefel aus Petrolkoks mit hohem Schwefelgehalt, als Brennstoff benutzt, der ferner einen geringen Kraftstoffverbrauch aufweist und schnell abbindet nach Anspruch 11, wobei der nach der Vicat-Methode in Anlehnung an den ASTM-Standard C-191 ermittelte Erstarrungsbeginn des Zements zwischen 10 und 45 Minuten beträgt.

14. Weißer Portlandzement hergestellt aus Klinker aus der Familie der Zementklinker mit hohem Schwefelgehalt und geringem Brennstoffverbrauch nach Anspruch 11, wobei der Klinker ferner eine entsprechend ASTM-Standard C-109 ermittelte Druckfestigkeit, von etwa 15 bis 25 N/mm² nach 1 Tag, 25 bis 35 N/mm² nach 3 Tagen, 40 bis 55 N/mm² nach 7 Tagen, und 50 bis 70 N/mm² nach 28 Tagen aufweist.

15. Weißer Portlandzement bestehend aus Zementklinker nach einem der Ansprüche 1 bis 4, wobei der Zement mit anderen Materialien wie Kalk, Schlacke, Flugasche und/oder puzzolanhaltigen Stoffen gemischt werden kann.

16. Weißer Portlandzement bestehend aus Zementklinker nach einem der Ansprüche 2 bis 3, wobei die Abwesenheit von C₃A im Klinker die Herstellung von sulfatbeständigen Zementen erlaubt.

## Revendications

1. Une composition de clinker de ciment Portland blanc, avec une capacité élevée de fixation du soufre provenant de coke de pétrole avec une teneur élevée en soufre (>5% 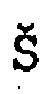 ), utilisé en tant que combustible, et en outre ce clinker présente une faible consommation en combustible et le ciment produit a une prise rapide, **caractérisé en ce qu'**elle comprend les quantités de phases de clinker en pourcentage en poids, comme suit :
3CaO.SiO₂ (C₃S): 40 à 75,
2CaO.SiO₂ (C₂S) : 10 à 35,
3CaO.Al₂O₃ (C₃A): 0 à 15,
CaO.SO₂ (C 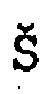 ): 0 à 10,
4CaO-3Al₂O₃.SO₃ (C₄A₃ 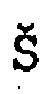 ): 2 à 15,
11CaO.7Al₂O₃.CaF₂ (C₁₁A₇.CaF₂): 0 à 5,
%CaF₂ total: 0,3 à 1,5 mesuré comme CaF₂,
%Fe₂O₃ : 0 à 0,5,
et un contenu en SO₃ entre 1,5 et 5% en poids obtenu par la calcination d'une farine crue comprenant principalement du CaO, SiO₂, Al₂O₃ et CaF₂, utilisant comme combustible du coke de pétrole avec une teneur en soufre supérieure à 5%, à des températures entre 1200 et 1350°C (2192 et 2462°F) sans ajout d'un quelconque additif contenant du SO₃ dans la farine crue.

2. Le clinker de ciment Portland blanc, avec une capacité élevée de fixation du soufre provenant du coke de pétrole avec une teneur élevée en soufre, utilisé comme un combustible, et présentant en outre une faible consommation en combustible et une prise rapide, selon la revendication 1, caractérisé en qu'il comprend les quantités de phases de clinker en pourcentage en poids, comme suit :
C₃S: 40 à 75,
C₂S: 10 à 35,
C 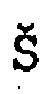 : 0 à 10,
C₄A₃ 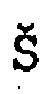 : 5 à 15,
C₁₁A₇.CaF₂: 2 à 5,
%CaF₂ total: 0,3 à 1,5 mesuré comme CaF₂,
%Fe₂ O₃: <0,5,
et un contenu en SO₃ entre 1,5 et 5% en poids obtenu par la calcination d'une farine crue contenant du CaO, SiO₂, Al₂O₃ et CaF₂, utilisant comme combustible du coke de pétrole avec une teneur en soufre supérieure à 5%, à une température d'environ 1250°C (2282°F) sans ajout d'un quelconque additif contenant du SO₃ dans la farine crue.

3. Le clinker de ciment Portland blanc, avec une capacité élevée de fixation du soufre provenant du coke de pétrole avec une teneur élevée en soufre et présentant en outre une faible consommation en combustible et une prise rapide, selon la revendication 1, caractérisé en qu'il comprend les quantités de phases de clinker en pourcentage en poids, comme suit :
C₃S: 40 à 75,
C₂S: 10 à 35,
C 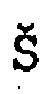 : 0 à 10,
C₄A₃ 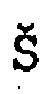 : 5 à 15,
%CaF₂ total: 0,3 à 1,5 mesuré comme CaF₂,
%Fe₂O₃ : <0,5,
et un contenu en SO₃ entre 1,5 et 5% en poids obtenu par la calcination d'une farine crue contenant du CaO, SiO₂, Al₂O₃ et CaF₂, utilisant comme combustible du coke de pétrole avec une teneur en soufre supérieure à 5%, à une température d'environ 1250°C (2282°F) sans ajout d'un quelconque additif contenant du SO₃ dans la farine crue.

4. Le clinker de ciment Portland blanc, avec une capacité élevée de fixation du soufre provenant du coke de pétrole avec une teneur élevée en soufre, utilisé comme un combustible, et présentant en outre une faible consommation en combustible et une prise rapide, selon la revendication 1, caractérisé en qu'il comprend les quantités de phases de clinker en pourcentage en poids, comme suit :
C₃S: 40 à 75,
C₂S: 10 à 35,
C₃A: 5 à 15,
C 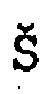 : 0 à 10,
C₄A₃ 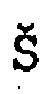 : 2 à 10,
%CaF₂ total: 0,3 à 1,5 mesuré comme CaF₂,
%Fe₂O₃: <0.5
et un contenu en SO₃ entre 1,5 et 5% en poids obtenu par la calcination d'une farine crue contenant du CaO, SiO₂, Al₂O₃ et CaF₂, utilisant comme combustible du coke de pétrole avec une teneur en soufre supérieure à 5%, à une température d'environ 1350°C (2462°F) sans ajout d'un quelconque additif contenant du SO₃ dans la farine crue.

5. Le clinker de ciment Portland blanc, avec une capacité élevée de fixation du soufre provenant du coke de pétrole avec une teneur élevée en soufre, utilisé comme un combustible, et présentant en outre une faible consommation en combustible et une prise rapide, selon l'une quelconque des revendications précédentes 1 à 4, dans lequel l'addition des quantités de phases de clinker C₂S et C₃A est supérieure ou égale à 10% en poids.

6. Le clinker de ciment Portland blanc, avec une capacité élevée de fixation du soufre provenant du coke de pétrole avec une teneur élevée en soufre, utilisé comme un combustible, et présentant en outre une faible consommation en combustible et une prise rapide, selon l'une quelconque des revendications précédentes 1 à 4, dans lequel la quantité de %CaF₂ total dans la farine crue devrait être de 0,3 à 1,0% en poids mesurée comme du CaF₂.

7. Le clinker de ciment Portland blanc, avec une capacité élevée de fixation du soufre provenant du coke de pétrole avec une teneur élevée en soufre, utilisé comme un combustible, et présentant en outre une faible consommation en combustible et une prise rapide, selon l'une quelconque des revendications précédentes 1 à 4, dans lequel la teneur en SO₃ du clinker de ciment est principalement obtenue par un combustible organique tel que le coke de pétrole avec un pourcentage de soufre supérieur à 5%.

8. Le clinker de ciment Portland blanc, avec une capacité élevée de fixation du soufre provenant du coke de pétrole avec une teneur élevée en soufre, utilisé comme un combustible, et présentant en outre une faible consommation en combustible et une prise rapide, selon la revendication 1, dans lequel éventuellement, ladite teneur en SO₃ du clinker peut être complétée par d'autres sources inorganiques choisies dans le groupe constitué par du plâtre, de l'anhydrite, ou des débris industriels contenant du soufre.

9. Le clinker de ciment Portland blanc, avec une capacité élevée de fixation du soufre provenant du coke de pétrole avec une teneur élevée en soufre, utilisé comme un combustible, et présentant en outre une faible consommation en combustible et une prise rapide, selon l'une quelconque des revendications précédentes 1 à 4, **caractérisé en ce qu'**il a des tailles de cristaux d'alite et bélite inférieures à 25µm, qui offre une meilleure facilité de broyage que le clinker de ciment Portland blanc conventionnel.

10. Le clinker de ciment Portland blanc, avec une capacité élevée de fixation du soufre provenant du coke de pétrole avec une teneur élevée en soufre, utilisé comme un combustible, et présentant en outre une faible consommation en combustible et une prise rapide, selon l'une quelconque des revendications précédentes 1 à 4, **caractérisé en ce qu'**il a un pourcentage de chaux libre inférieur à 1,5% dans le clinker obtenu.

11. Un ciment Portland blanc, comprenant le clinker de ciment selon l'une quelconque des revendications précédentes 1 à 4, dans lequel la teneur en SO₃ dudit ciment est entre 3,5 et 10%.

12. Le ciment Portland blanc, comprenant le clinker blanc avec une capacité élevée de fixation du soufre provenant d'un coke de pétrole avec une teneur élevée en soufre, utilisé comme combustible, et présentant en outre une faible consommation en combustible et une prise rapide, selon la revendication 11, **caractérisé en ce qu'**il a une aire spécifique de 465 à 775 in²/g mesurée selon la norme ASTM C-204 par Blaine.

13. Le ciment Portland blanc obtenu à partir de clinker blanc avec une capacité élevée de fixation du soufre provenant d'un coke de pétrole à teneur élevée en soufre, utilisé comme combustible, et présentant en outre une faible consommation en combustible et une prise rapide, selon la revendication 11, **caractérisé en ce qu'**il a un temps de prise initial entre 10 et 45 minutes mesuré selon la norme ASTM C-191 par Vicat.

14. Le ciment Portland blanc obtenu à partir de la famille de clinkers à teneur élevée en soufre et faible consommation de combustible, selon la revendication 11, **caractérisé en ce qu'**il a en outre une résistance à la compression mesurée selon la norme ASTM C-109 d'environ 15 à 25 N/mm² @ 1 jour, 25 à 35 N/mm² @ 3 jours, 40 à 55 N/mm² @ 7 jours, et de 50 à 70 N/mm² @ 28 jours.

15. Un ciment Portland blanc comprenant le clinker de ciment selon l'une quelconque des revendications 1 à 4, **caractérisé en ce qu'**il peut être mélangé avec d'autres matériaux tel que la chaux, les scories, les cendres volantes et/ou des matériaux puzolaniques.

16. Un ciment Portland blanc comprenant le clinker de ciment selon l'une quelconque des revendications 2 à 3, dans lequel l'absence de C₃A dans le clinker permet la fabrication de ciments résistants aux sulfates.
